# DEMANDE DE BREVET EUROPEEN

(11) **EP 4 635 792 A1**
(43) Date de publication de la demande: **22.10.2025**
(21) Numéro de dépôt: 25165492.7
(22) Date de dépôt: 21.03.2025
(51) Int. Cl.: B60N 2/16

(54) **SYSTÈME DE COMMANDE POUR SIÈGE DE VÉHICULE AUTOMOBILE ET SIÈGE DE VÉHICULE AUTOMOBILE COMPRENANT LE SYSTÈME DE COMMANDE**

(30) Priorité: 19.04.2024 FR 2404101
(71) Demandeur: FAURECIA Sièges d'Automobile, 92000 Nanterre (FR)
(72) Inventeur: TANGUY, Julien, 14570 LE VEY (FR); RICHARD, Denis, 14320 SAINT MARTIN DE FONTENAY (FR)
(74) Mandataire: Plasseraud IP

(57) **Abrégé**

Système de commande (1) pour siège de véhicule automobile (100) comprenant
un dispositif de commande (10) comportant un arbre de commande (12) et une plaque support (20) comprenant au moins un trou de fixation (22), l'arbre de commande (12) est configuré pour tourner autour d'un axe de commande (15) par rapport à la plaque support (20),
au moins un élément de fixation (50), l'élément de fixation (50) comprend une tête de fixation (52), une portion intermédiaire (54) et une portion de tige (58), la tête de fixation (52) comprend un rebord (53), la portion intermédiaire (54) présente une section non circulaire et le trou de fixation (22) présente une forme complémentaire de la portion intermédiaire (54),
un flasque (30) comprenant un trou de maintien (32), la portion de tige (58) s'étendant à travers le trou de maintien (32), et
un élément de blocage (40) coopérant avec la portion de tige (58).

## Description

### Domaine de la divulgation

La présente divulgation concerne un système de commande pour siège de véhicule et un siège de véhicule comprenant le système de commande. Le système de commande peut en particulier former un système de réglage de réhausse, manuelle ou électrique. Le siège de véhicule est en particulier un siège de véhicule automobile.

### Etat de la technique

Le document FR 3 009 244 A1 décrit un système de commande pour siège de véhicule comprenant :
un dispositif de commande comportant un arbre de commande et une plaque support, la plaque support présente une première face de fixation et une deuxième face de fixation, la plaque support comprend au moins un trou de fixation s'étendant entre la première face de fixation et la deuxième face de fixation, l'arbre de commande est configuré pour tourner autour d'un axe de commande par rapport à la plaque support,
au moins un élément de fixation, l'élément de fixation présente un axe de fixation parallèle à l'axe de commande, l'élément de fixation comprend une tête de fixation et une portion de tige,
un flasque présentant une première face de maintien et une deuxième face de maintien, la première face de maintien s'étendant en regard de la deuxième face de fixation, le flasque comprend un trou de maintien, le trou de maintien s'étend entre la première face de maintien et la deuxième face de maintien, la portion de tige s'étendant à travers le trou de maintien,
un élément de blocage coopérant avec la portion de tige pour maintenir le dispositif de commande par rapport au flasque en translation suivant l'axe de fixation.

La présente divulgation vise à améliorer la fixation du dispositif de commande sur le flasque, en particulier afin de faciliter sa réalisation, améliorer sa robustesse ou améliorer la compacité du système.

### Exposé de la divulgation

Pour remédier aux problèmes précités, conformément à la présente divulgation, la tête de fixation comprend un épaulement et un rebord, l'épaulement présente une face d'appui s'étendant en regard de la deuxième face de fixation (suivant l'axe de fixation), le rebord présente une face de retenue s'étendant en regard de la première face de fixation (suivant l'axe de fixation), de sorte que l'élément de fixation est retenu en translation suivant l'axe de fixation par rapport à la plaque support qui est maintenue entre le rebord et l'épaulement.

Ainsi, l'élément de fixation est fixé sur la plaque support avant fixation de la plaque support sur le flasque. En outre, il peut être évité de placer un outil pour arrêter l'élément de fixation en rotation autour de l'axe de fixation. Dans ces conditions, la tête de fixation peut être disposée plus près du dispositif de commande, ce qui réduit l'encombrement du système de commande. La fixation du dispositif de commande sur le flasque est ainsi facilitée.

Selon une autre caractéristique, le rebord est de préférence formé par une pluralité de portions de rebord disjointes.

Ainsi, le rapport entre l'effort nécessaire pour réaliser le rebord et la résistance du rebord à la déformation est accrue. Autrement dit, ainsi à résistance mécanique de matériau donné et puissance de machine pour réaliser le rebord donné, la résistance du rebord aux sollicitations mécaniques peut être améliorées.

Selon une caractéristique complémentaire ou alternative, chaque portion de rebord présente perpendiculairement à l'axe de fixation de préférence une forme de croissant de lune.

Un bon rapport entre l'effort pour réaliser le rebord et la résistance du rebord est ainsi obtenu.

Selon une autre caractéristique, le rebord est de préférence réalisé par estampage.

Selon une autre caractéristique, de préférence la tête de fixation comprend une portion intermédiaire, perpendiculairement à l'axe de fixation, la portion intermédiaire présente une section non circulaire, le trou de fixation présente une forme complémentaire de la portion intermédiaire coopérant avec la portion intermédiaire pour maintenir l'élément de fixation en rotation autour de l'axe de fixation par rapport à la plaque support.

Ainsi, la rotation de l'élément de fixation autour de l'axe de fixation est fermement empêchée, ce qui dispense d'utiliser un outil pour arrêter l'élément de fixation en rotation autour de l'axe de fixation.

Selon une caractéristique complémentaire, de préférence la portion intermédiaire présente, perpendiculairement à l'axe de fixation, une pluralité de sommets et le trou de fixation comprend une première portion d'arrêt et une deuxième portion d'arrêt de part et d'autre de chaque sommet formant arrêt en rotation de la portion intermédiaire autour de l'axe de fixation.

Selon une caractéristique complémentaire, de préférence la portion intermédiaire présente, perpendiculairement à l'axe de fixation, une forme allongée s'étendant suivant une direction d'allongement entre un premier sommet et un deuxième sommet.

Ainsi, un bon compromis est trouvé entre résistance et coût du système de commande.

Selon une autre caractéristique, l'élément de fixation comprend de préférence une portion conique venant au contact du trou de maintien.

On réduit ainsi les jeux entre la plaque support et le flasque. Compte tenu de l'effort de serrage, les déplacements entre la plaque support et le flasque sont réduits. Toutefois, en particulier dans le cas où le dispositif de commande fonctionne par coincement, les vibrations sont susceptibles d'engendrer des déplacements entre la plaque support et le flasque provoquant des déplacements inopinés dans le dispositif de commande qui peuvent être réduits grâce à la caractéristique mentionnée supra.

Selon une caractéristique complémentaire, le trou de maintien est de préférence déformé par le contact de la portion conique.

Ainsi, il n'est pas nécessaire d'avoir des tolérances dimensionnelles très faibles pour éviter que la portion conique réduise substantiellement la pression exercée suivant l'axe de fixation.

Selon une caractéristique complémentaire ou alternative, l'élément de blocage est un écrou.

Dans le cas où cette caractéristique et la précédente sont complémentaires, la déformation du trou de maintien peut être obtenue par serrage de l'écrou, notamment entre la plaque support et le flasque.

Pour ce faire, l'élément de fixation présente de préférence une dureté supérieure à la dureté du flasque.

Selon une autre caractéristique, la portion conique est de préférence au contact du trou de maintien dans une pluralité de zones de contact disjointes.

La résistance à la déformation du trou de maintien est ainsi très nettement réduite par rapport au cas où le contact entre l'élément de fixation et le trou de maintien est continu, car il se formerait alors un bourrelet annulaire (continu) fermé.

De préférence, la portion conique est au contact du trou de maintien dans deux zones de contact diamétralement opposées perpendiculairement à l'axe de fixation.

Selon une caractéristique complémentaire ou alternative, de préférence le flasque comprend un alésage à travers lequel s'étend l'arbre de commande, et la plaque support comprend une portion annulaire, la portion annulaire présente une surface extérieure coopérant avec l'alésage du flasque.

Ainsi, l'axe de fixation ne peut se déplacer par rapport à l'axe de commande qu'en rotation autour de l'axe de commande et il suffira d'un seul élément de fixation comprenant une portion conique pour s'opposer à ce mouvement.

Selon une autre caractéristique, de préférence le système de commande comprend en outre une plaque de guidage, la plaque de guidage comporte un trou de guidage et un trou de palier, l'élément de fixation s'étend dans le trou de guidage et la plaque de guidage est maintenue suivant l'axe de fixation entre le flasque et l'écrou, le trou de palier forme un palier pour l'arbre de commande.

Ainsi, le système de commande ne nécessite pas d'opération supplémentaire pour guider l'arbre de commande.

La présente divulgation concerne en outre un siège de véhicule comprenant le système de commande.

Selon une autre caractéristique, de préférence le un siège de véhicule comprend en outre un pignon solidaire de l'arbre de commande et le siège comprend en outre une bielle et une portion dentée, la bielle est articulée en rotation par rapport au flasque autour d'un axe d'articulation et la portion dentée est solidaire de la bielle et coopère avec le pignon.

Selon une caractéristique complémentaire, de préférence le siège de véhicule comprend une armature d'assise comportant le flasque et le dispositif de commande forme réhausse permettant de régler la hauteur de l'armature d'assise.

### Brève description des figures

D'autres caractéristiques et avantages de la présente divulgation apparaîtront dans la description détaillée suivante, se référant aux dessins annexés dans lesquels :
Fig. 1 représente schématiquement un siège de véhicule comprenant une assise, l'assise comportant une armature et étant équipée d'un système de commande selon un premier mode de réalisation,
Fig. 2 représente schématiquement le siège de véhicule dont l'armature d'assise est équipée d'un système de commande selon un deuxième mode de réalisation,
Fig. 3 représente en perspective l'armature d'assise équipée du système de commande selon le premier mode de réalisation,
Fig. 4 représente le système de commande selon le premier mode de réalisation en perspective éclatée,
Fig. 5 représente le système de commande suivant la flèche repérée V à la figure 3,
Fig. 6 représente le système de commande en coupe suivant la ligne repérée VI-VI à la figure 5,
Fig. 7 représente le système de commande en coupe suivant la ligne repérée VII-VII à la figure 6,
Fig. 8 représente le système de commande en coupe suivant la ligne repérée VIII-VIII à la figure 6,
Fig. 9 illustre une opération pour réaliser le système de commande.

### Description détaillée de la divulgation

Les dessins et la description ci-après contiennent, pour l'essentiel, des éléments de caractère certain. Ils pourront donc non seulement servir à mieux faire comprendre la présente divulgation, mais aussi contribuer à sa définition, le cas échéant.

Aussi, la présente divulgation est relative à un siège 100 comprenant une assise 102 et un dossier 104. Le siège 100 repose sur un plancher de véhicule 80.

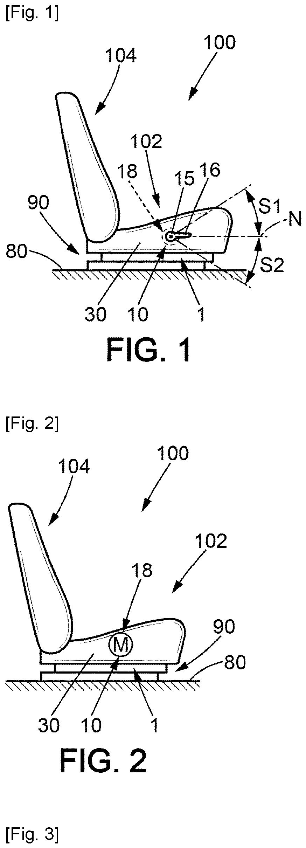

Tel qu'illustré en particulier à la figure 2, l'assise 102 comprend un système de commande 1 permettant de régler la hauteur de l'assise 102 par rapport au plancher de véhicule 80.

Tel qu'illustré en particulier à la figure 3, l'assise 102 comprend une armature d'assise 70 et un système de commande 1. L'armature d'assise 70 comprend un flasque 30, relié à un flasque opposé 79 par une traverse avant 77 et une traverse arrière 78. La traverse avant 77 et la traverse arrière 78 s'étendent suivant une direction axiale Z. Le flasque 30 et le flasque opposé 79 sont formés par des plaques mises en forme s'étendant sensiblement perpendiculairement à la direction axiale Z. Le siège 100 comprend en outre une bielle 71 et trois autres bielles 72, 73, 74 supportant l'armature d'assise 70. Une portion dentée 76 est liée à la bielle 71. Les bielles 71, 72, 73, 74 présentent chacune une extrémité supérieure articulée en rotation par rapport à l'armature d'assise 70 autour d'un axe supérieur respectif s'étendant suivant la direction axiale Z et une extrémité inférieure articulée en rotation par rapport au plancher de véhicule 80 autour d'un axe inférieur respectif s'étendant suivant la direction axiale Z. Dans le premier mode de réalisation, la portion dentée 76 a une forme circulaire centrée sur l'axe supérieur d'articulation de la bielle 71. En variante, la portion dentée 76 pourrait être rectiligne et former une crémaillère. Dans les modes de réalisation illustrés, le siège 100 comprend en outre des glissières 90 disposées entre le plancher de véhicule 80 et les bielles 71, 72, 73, 74.

Le système de commande 1 comprend un dispositif de commande 10, le flasque 30, au moins un élément de fixation 50 et un élément de blocage. Dans les modes de réalisation illustrés, l'élément de blocage est un écrou 40. En variante, l'élément de blocage pourrait être une goupille ou un dispositif analogue. En outre, dans les modes de réalisation illustrés, les éléments de fixation 50 et les écrous 40 sont chacun au nombre de trois. Le dispositif de commande 10 comporte un arbre de commande 12, un pignon 14, un dispositif d'entrainement 18 et une plaque support 20. L'arbre de commande 12 peut être entrainé en rotation autour de l'axe commande 15 par rapport à la plaque support 20 par le dispositif d'entrainement 18 pour agir sur la bielle 71. L'axe de commande 15 s'étend suivant la direction axiale Z.

Dans le mode de réalisation illustré à la figure 1, le dispositif d'entrainement 18 est de type manuel et comporte une poignée de commande 16 actionnable par un utilisateur. Le dispositif d'entrainement 18 comprend un premier étage immobilisant en rotation l'arbre de commande 12 autour de l'axe de commande 15 par rapport la plaque support 20 et un deuxième étage, optionnel, actionné par la poignée de commande 16. La poignée de commande 16 est élastiquement sollicitée par le deuxième étage vers une position neutre N par rapport à la plaque support 20. Lorsque la poignée de commande 16 est écartée de la position neutre N par rotation autour de l'axe de commande 15 dans un premier sens S1 par rapport à la plaque support 20, la poignée de commande 16 entraine l'arbre de commande 12 en rotation autour de l'axe de commande 15 dans le premier sens S1. Lorsque la poignée de commande 16 est écartée de la position neutre N par rotation autour de l'axe de commande 15 dans un deuxième sens S2, opposé au premier sens S1, par rapport à la plaque support 20, la poignée de commande 16 entraine l'arbre de commande 12 en rotation autour de l'axe de commande 15 dans le deuxième sens S2 par rapport à la plaque support 20. Lorsque la poignée de commande 16 revient vers la position neutre N, l'arbre de commande 12 est maintenu immobilisé en rotation par rapport à la plaque support 20 par le premier étage du dispositif d'entrainement 18.

Pour des raisons de lisibilité, la poignée de commande 16 est illustrée uniquement à la figure 1.

Un tel dispositif d'entrainement 18 étant bien connu, notamment dans le document FR 2 809 355 A1, il ne sera pas décrit plus en détail.

La figure 2 illustre un dispositif d'entrainement 18 alternatif comprenant un moto-réducteur M. Le moto-réducteur M comprend un moteur électrique et un réducteur irréversible, tel qu'un système roue et vis sans fin, reliant le moteur électrique à l'arbre de commande 12. Le dispositif d'entrainement 18 comprend en outre une première commande et une deuxième commande (non représentées), du type interrupteur ou commande analogue bien connue, commandant le moteur électrique, afin de faire tourner l'arbre de commande 12 dans le premier sens S1 et dans le deuxième sens S2.

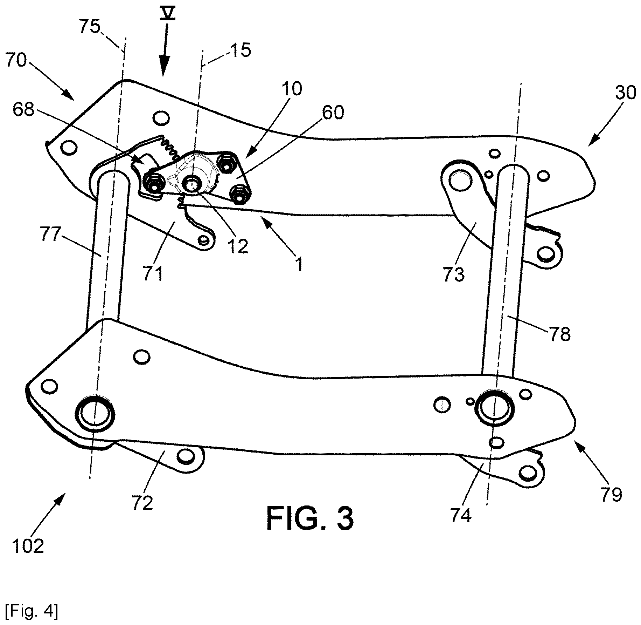

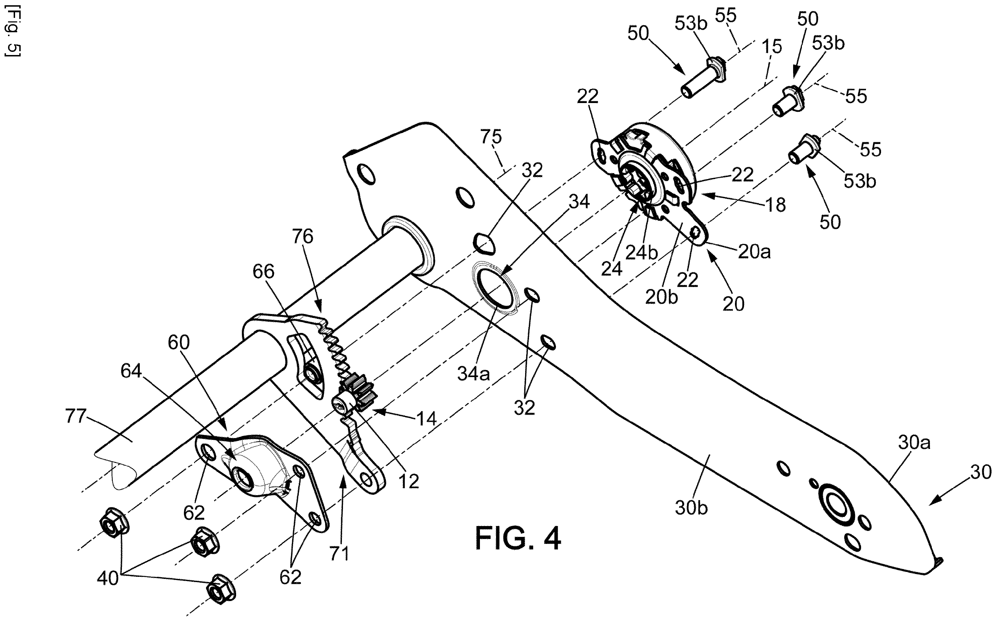

Dans la suite, la divulgation sera décrite en relation notamment avec les figures 4 et 5 illustrant le dispositif d'entrainement 18 du premier mode de réalisation. Toutefois, la suite de la divulgation s'appliquerait de manière similaire en relation avec le dispositif d'entrainement selon le deuxième mode de réalisation.

La plaque support 20 supporte le dispositif d'entrainement 18. Le pignon 14 est rigidement fixé à l'arbre de commande 12 et coopère avec la portion dentée 76. La rotation de l'arbre de commande 12 entraine par conséquent en rotation la bielle 71. Les bielles 71, 72, 73, 74, le flasque 30, le flasque opposé 79 et les glissières 90 forment deux parallélogrammes déformables transformant la rotation de la bielle 71 en déplacement en hauteur de l'assise 102.

La plaque support 20 présente une première face de fixation 20a et une deuxième face de fixation 20b, opposée à la première face de fixation 20a. Le dispositif d'entrainement 18 est maintenu sur la première face de fixation 20a et rigidement fixé à la paque support 20. La plaque support 20 comprend trois trous de fixations 22 traversant la plaque support 20 de la première face de fixation 20a à la deuxième face de fixation 20b. La plaque support 20 comprend une portion annulaire 24 coaxiale avec l'axe de commande 15. La portion annulaire 24 présente une surface extérieure 24b.

Le flasque 30 présente une première face de maintien 30a et une deuxième face de maintien 30b, opposée à la première face de maintien 30a. La première face de maintien 30a s'étend en regard de la deuxième face de fixation 20b. Le flasque 30 comprend en outre un alésage 34 présentant une surface intérieure 34a. La portion annulaire 24 de la plaque support 20 s'étend dans l'alésage 34 du flasque 30 et la surface extérieure 24b de la portion annulaire 24 coopère avec la surface intérieure 34a de l'alésage 34, de sorte que l'alésage 34 du flasque 30 est centré par rapport à l'axe de commande 15. Le flasque 30 comprend en outre trois trous de maintien 32 s'étendant à travers le flasque 30 entre la première face de maintien 30a et la deuxième face de maintien 30b.

Les éléments de fixation 50 s'étendent chacun suivant un axe de fixation 55 parallèle à la direction axiale Z entre une première extrémité 50a et une deuxième extrémité 50b. Les éléments de fixation 50 comprennent successivement suivant la direction axiale Z, de la première extrémité 50a vers la deuxième extrémité 50b, une tête de fixation 52, une portion intermédiaire 54, un épaulement 56, une portion conique 57 et une portion de tige 58.

La tête de fixation 52 comprend successivement suivant la direction axiale Z, de la première extrémité 50a vers la deuxième extrémité 50b, une portion d'extrémité 51, un rebord 53 et une portion intermédiaire 54.

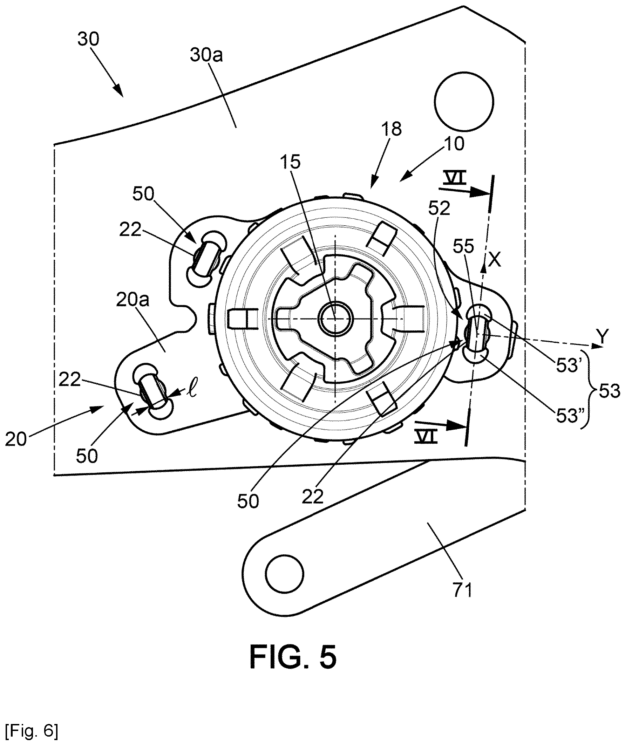

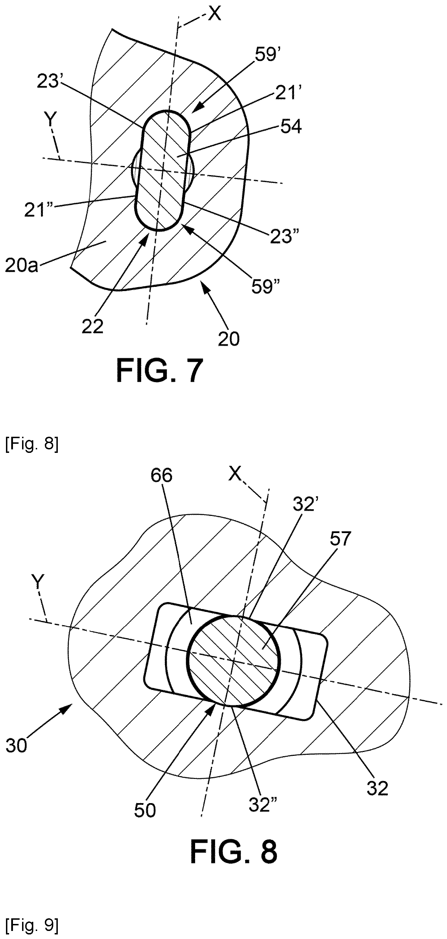

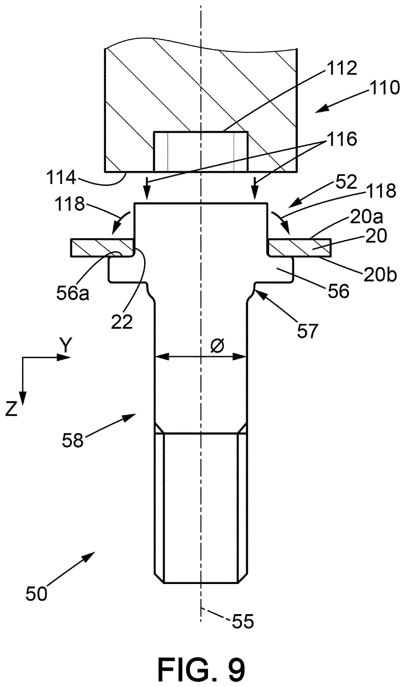

Tel qu'illustré en particulier aux figures 6 et 9, la portion de tige 58 présente un diamètre de tige Φ et est filetée au moins en partie pour coopérer avec l'écrou 40.

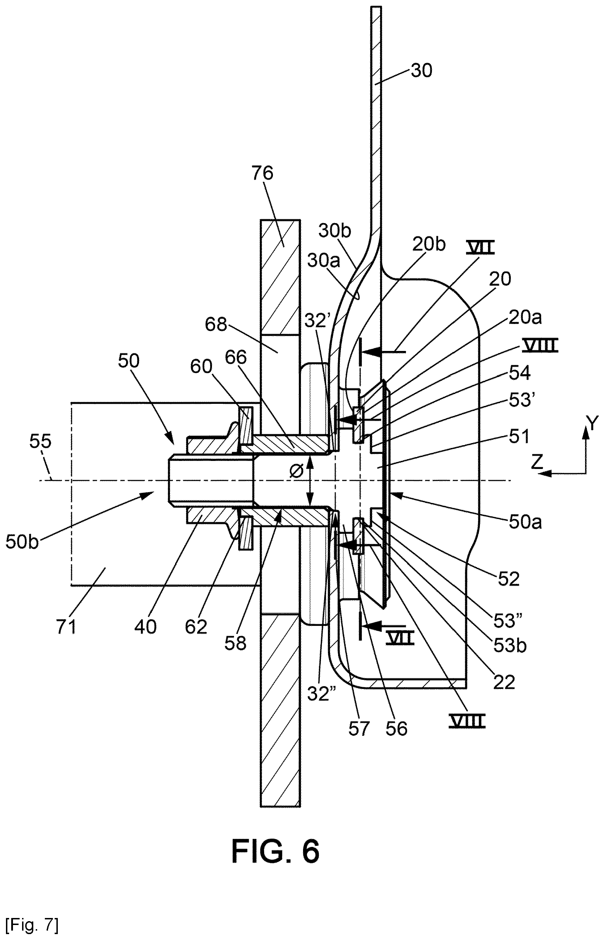

Perpendiculairement à l'axe de fixation 55, la portion intermédiaire 54 de chaque élément de fixation 50 présente une section non circulaire et chaque trou de fixation 22 de la plaque support 20 présente une section complémentaire bloquant l'élément de fixation 50 en rotation autour de l'axe de fixation 55 par rapport à la plaque support 20. Plus précisément, tel qu'illustré en particulier à la figure 7, la portion intermédiaire 54 présente une pluralité de sommets 59', 59" et la tête de fixation comprend une première portion d'arrêt 21', 21" et une deuxième portion d'arrêt 23', 23" au niveau de chaque sommet 59', 59". Les premières portions d'arrêt 21', 21" empêche la rotation de l'élément de fixation 50 par rapport à la plaque support 20 autour de l'axe de fixation 55 en formant butée dans un sens et les deuxièmes portions d'arrêt 23', 23" empêche la rotation de l'élément de fixation 50 par rapport à la plaque support 20 autour de l'axe de fixation 55 en formant butée dans un sens opposé.

Dans le mode de réalisation illustré, chaque élément de fixation 50 présente une forme allongée s'étendant suivant une direction d'allongement X entre un premier sommet 59' et un deuxième sommet 59".

Tel qu'illustré en particulier à la figure 6, l'épaulement 56 présente une face d'appui 56a, plane, s'étendant perpendiculairement à l'axe de fixation 55 et en regard de la deuxième face de fixation 20b. Plus précisément, dans le mode de réalisation illustré, la face d'appui 56a est au contact de la deuxième face de fixation 20b.

Tel qu'illustré en particulier aux figures 5 et 6, le rebord 53 présente une face de retenue 53b en regard de la première face de fixation 20a. Plus précisément, dans le mode de réalisation illustré, la face de retenue 53b est au contact de la première face de fixation 20a.

Comme cela apparait en particulier à la figure 5, le rebord 53 comprend une pluralité de portion de rebord disjointes. Dans le mode de réalisation, le rebord 53 comprend deux portions de rebord 53', 53" diamétralement opposées suivant la direction d'allongement X. Chaque portion de rebord 53', 53" présente, perpendiculairement à l'axe de fixation 55, une forme de croissant de lune.

La portion d'extrémité 51 fait saillie du rebord 53 suivant la direction axiale Z. La portion d'extrémité 51 présente, perpendiculairement à la direction axiale Z une forme allongée suivant la direction d'allongement X. La portion d'extrémité 51 présente suivant la direction d'allongement X une longueur supérieure au diamètre de tige Φ de la portion de tige 58. La tête de fixation 52 présente une largueur l suivant une direction transversale Y perpendiculaire à la direction d'allongement X et à la direction axiale Z. La largeur l de la tête de fixation 52 est constante suivant la direction axiale Z et est inférieure au diamètre de tige Φ de la portion de tige 58.

La figure 9 illustre la réalisation du rebord 53 par estampage. La tête de fixation 52 présente initialement, perpendiculairement à la direction axiale Z, une section constante suivant la direction axiale Z. La tête de fixation 52 de chaque élément de fixation 50 est insérée dans le trou de fixation 22 correspondant de la plaque support 20, jusqu'à amener la face d'appui 56a de l'épaulement 56 en appui contre la deuxième face de fixation 20b de la plaque support 20. Puis, un poinçon 110 présentant une cavité 112 et une face d'estampage 114 est appliqué contre la première extrémité 50a de l'élément de fixation 50, tel qu'illustré par les premières flèches 116. Le mouvement du poinçon est poursuivi et le poinçon 110 déforme la tête de fixation 52 avec la face d'estampage 114 pour créer les portions de rebord 53', 53" venant s'appliquer contre la première face de fixation 20a de la plaque support, tel qu'illustré par les deuxièmes flèches 118, la portion d'extrémité 51 étant reçue dans la cavité 112 n'est pas déformée.

Ainsi, l'élément de fixation 50 est retenu en translation suivant la direction axiale Z par rapport à la plaque support 20 par les portions de rebord 53', 53" et en sens opposé par l'épaulement 56. Plus généralement, la plaque support 20 étant pincée entre le rebord 53 et l'épaulement 56, la face de retenue 53b s'appliquant contre la première face de fixation 20a et la face d'appui 56a s'appliquant contre la deuxième face de fixation 20b, le rebord 53 et l'épaulement 56 ne permettent à chaque élément de fixation 50 que de pivoter autour de l'axe de fixation 55 par rapport à la plaque support 20. Or, le mouvement de rotation de chaque élément de fixation 50 par rapport à la plaque support 20 autour de l'axe de fixation 55 étant empêché par la coopération entre la portion intermédiaire 54 et le trou de fixation 22, chaque élément de fixation 50 est rigidement fixé à la plaque support 20.

Tel qu'illustré en particulier aux figures 6 et 8, la portion conique 57 de l'un des éléments de fixation 55 vient au contact du trou de maintien 32. Il n'est pas nécessaire que plus d'un élément de fixation 50 comporte une portion conique 57 ou du moins que la portion conique 57 vienne au contact du trou de fixation 22, dans la mesure où la plaque support 20 est guidée par rapport au flasque 30 par la coopération entre la portion annulaire 24 et l'alésage 34.

Tel qu'illustré à la figure 8, perpendiculairement la direction axiale Z, le trou de maintien 32 ne présente pas une section circulaire Par conséquent, la portion conique 57 est au contact du trou de maintien 32 dans une pluralité de zones de contact 32', 32" disjointes. Dans le mode de réalisation illustré, perpendiculairement la direction axiale Z, le trou de maintien 32 présentant une section rectangulaire la portion conique 57 est au contact du trou de maintien 32 dans deux zones de contact 32', 32" disjointes, diamétralement opposées suivant la direction d'allongement X.

L'élément de fixation 50 présentant une dureté très supérieure à la dureté du flasque 30, la portion conique 57 n'est pas déformée par le contact avec le trou de maintien 32, mais au contraire le trou de maintien 32 est déformé par la portion conique 57 dans les zones de contact 32', 32", lors du serrage de l'écrou 40.

Tel qu'illustré en particulier aux figures 4 et 6, la plaque de guidage 60 comporte des trous de guidage 62 et un trou de palier 64. Les trous de guidage 62 sont traversés par la portion de tige 58 de chaque l'élément de fixation 50. Les écrous 40 pressent la plaque de guidage 60 suivant la direction axiale Z.

Tel qu'illustré en particulier aux figures 4 et 6, l'un des éléments de fixation 50 passe à travers une ouverture 68 dans la portion dentée 76. La portion de tige 58 s'étend à travers une entretoise 66 et l'entretoise 66 est interposée entre la plaque de guidage 60 et le flasque 30 suivant la direction axiale Z. Les deux autres éléments de fixation 50 maintiennent la plaque de guidage 60 directement contre le flasque 30 (il n'y a pas d'entretoise entre la plaque de guidage 60 et le flasque 30) par serrage des écrous 40.

La plaque de guidage 60 comprend en outre un trou de palier 64 formant palier pour l'arbre de commande 12. Le pignon 14 est ainsi disposé dans un logement de la plaque de guidage 60 s'étendant entre la plaque de guidage 60 et le flasque 30.

Bien évidemment, la présente divulgation n'est pas limitée aux modes de réalisation décrits précédemment et fournis uniquement à titre d'exemple. Elle englobe diverses modifications, formes alternatives et autres variantes que pourra envisager la personne du métier dans le cadre de la présente divulgation et notamment toutes combinaisons des différents modes de fonctionnement décrits précédemment, pouvant être pris séparément ou en association.

## Revendications

1. Système de commande (1) pour siège de véhicule (100) comprenant :
un dispositif de commande (10) comportant un arbre de commande (12) et une plaque support (20), la plaque support (20) présente une première face de fixation (20a) et une deuxième face de fixation (20b), la plaque support (20) comprend au moins un trou de fixation (22) s'étendant entre la première face de fixation (20a) et la deuxième face de fixation (20b), l'arbre de commande (12) est configuré pour tourner autour d'un axe de commande (15) par rapport à la plaque support (20),
au moins un élément de fixation (50), l'élément de fixation présente un axe de fixation (55) parallèle à l'axe de commande (15), l'élément de fixation (50) comprend une tête de fixation (52) et une portion de tige (58),
un flasque (30) présentant une première face de maintien (30a) et une deuxième face de maintien (30b), la première face de maintien (30a) s'étendant en regard de la deuxième face de fixation (20b), le flasque (30) comprend un trou de maintien (32), le trou de maintien (32) s'étend entre la première face de maintien (30a) et la deuxième face de maintien (30b), la portion de tige (58) s'étendant à travers le trou de maintien (32),
un élément de blocage (40) coopérant avec la portion de tige (58) pour maintenir le dispositif de commande (10) par rapport au flasque (30) en translation suivant l'axe de fixation (55),
le système de commande (1) est **caractérisé en ce que** la tête de fixation (52) comprend :
un épaulement (56), l'épaulement (56) présente une face d'appui (56a) s'étendant en regard de la deuxième face de fixation (20b), et
un rebord (53), le rebord (53) présente une face de retenue (53b) s'étendant en regard de la première face de fixation (20a), de sorte que l'élément de fixation (50) est retenu en translation suivant l'axe de fixation (55) par rapport à la plaque support (20) qui est maintenue entre le rebord (53) et l'épaulement (56).

2. Système de commande selon la revendication 1, dans lequel le rebord (53) est formé par une pluralité de portions de rebord (53', 53") disjointes.

3. Système de commande selon la revendication précédente dans lequel chaque portion de rebord (53', 53") présente perpendiculairement à l'axe de fixation (55) une forme de croissant de lune.

4. Système de commande selon l'une quelconque des revendications précédentes dans lequel le rebord (53) est réalisé par estampage.

5. Système de commande selon l'une quelconque des revendications précédentes dans lequel la tête de fixation (52) comprend une portion intermédiaire (54), perpendiculairement à l'axe de fixation (55), la portion intermédiaire (54) présente une section non circulaire, le trou de fixation (22) présente une forme complémentaire de la portion intermédiaire (54) coopérant avec la portion intermédiaire (54) pour maintenir l'élément de fixation (50) en rotation autour de l'axe de fixation (55) par rapport à la plaque support (20).

6. Système de commande selon l'une quelconque des revendications précédentes dans lequel l'élément de fixation (50) comprend une portion conique (57) venant au contact du trou de maintien (32).

7. Système de commande selon la revendication précédente dans lequel le trou de maintien (32) est déformé par le contact de la portion conique (57).

8. Système de commande selon l'une quelconque des revendications 6 et 7 dans lequel la portion conique (57) est au contact du trou de maintien (32) dans une pluralité de zones de contact (32', 32") disjointes.

9. Siège de véhicule (100) comprenant le système de commande (1) selon l'une quelconque des revendications précédentes.

10. Siège de véhicule selon la revendication précédente dans lequel le système de commande comprend en outre un pignon (14) solidaire de l'arbre de commande (12) et le siège comprend en outre :
une bielle (71) articulée en rotation par rapport au flasque (30) autour d'un axe d'articulation (75), et
une portion dentée (76) solidaire de la bielle (71) et coopérant avec le pignon (14).
